# EUROPÄISCHE PATENTSCHRIFT

(11) **EP 0 398 077 B1**
(45) Veröffentlichungstag und Bekanntmachung des Hinweises auf die Patenterteilung: **15.12.1993**
(21) Anmeldenummer: 90108344.4
(22) Anmeldetag: 03.05.1990
(51) Int. Cl.: B61D 25/00, B60J 1/10, E06B 1/60

(54) **Vorrichtung für die Halterung von Fensterscheiben, insbesondere bei Schienenfahrzeugen**
Device for the mounting of window-panes, in particular on railway vehicles
Dispositif pour le support des vitres, notamment de véhicules ferroviaires

(30) Priorität: 16.05.1989 CH 1813/89
(43) Veröffentlichungstag der Anmeldung: 22.11.1990
(73) Patentinhaber: INVENTIO AG, CH-6052 Hergiswil NW (CH)
(72) Erfinder: Christeller, Reinhard, CH-4133 Rheinfelden (CH); Otto, Hermann, D-5600 Wuppertal 2 (DE); Davertzhofen, Ferdinand, D-5600 Wuppertal 1 (DE)

(56) Entgegenhaltungen:
- EP-A- 0 114 257
- EP-A- 0 144 620
- CH-A- 400 520
- DE-B- 2 328 367
- SOVIET INVENTIONS ILLUSTRATED,Woche 8847, Klasse Q21, NR.88-337050/47, 11. Januar 1989,Derwent Pu & SU-a-1397338 (KALI NIN WAGON CONS.) 23-05-1988

## Beschreibung

Eine Vorrichtung für den Ein/Ausbau und die Befestigung von aus Rahmen und Scheiben bestehenden Fenstern mittels mechanischen Befestigungselementen in Fensteröffnungen bei Schienenfahrzeugen, wobei, zwischen einem Fensterrahmen und einer Fahrzeugwand mindestens eine kraft- und formschlüssige Schraubverbindung vorhanden ist.

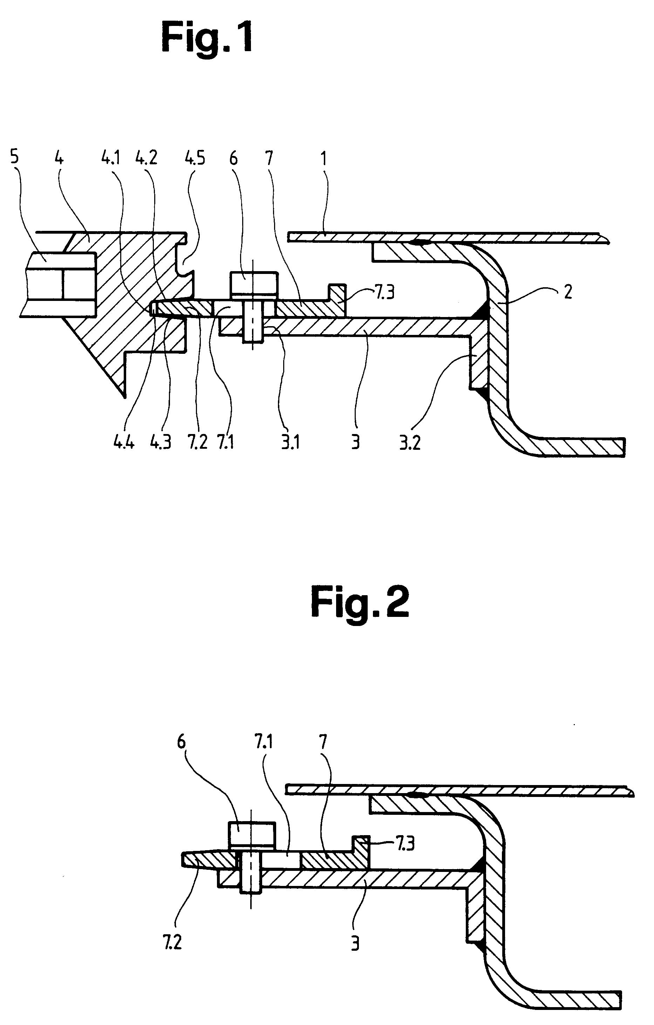

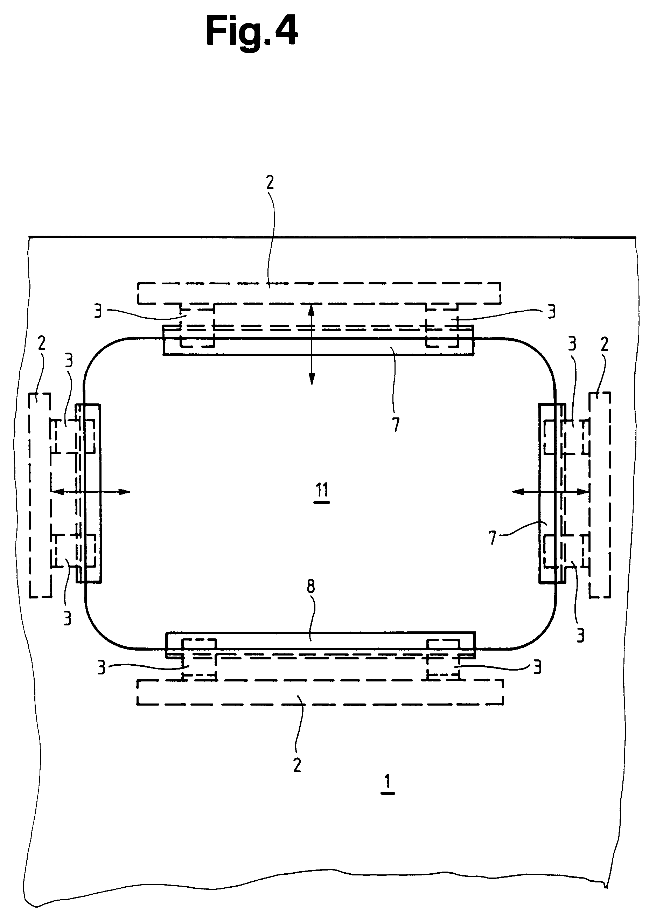

Die europäische Patentanmeldung EPA - 0 114 257 beschreibt ein aussenhautbündiges Fahrzeugfenster (2), welches auch als mechanisch tragendes Teil dieser Aussenhaut (4) bestimmt ist und das, gem. Fig. 1, von innen an eine Fahrzeugstruktur (14) mit Schrauben (38) an dieser festgeschraubt wird. Gemäss einer Variante nach Fig. 4 kann das Fahrzeugfenster (4) von der Aussenseite an die Fahrzeugstruktur (4) angeschraubt werden, wobei auf der Innenseite noch Ausgleichsleisten (54) mittels Stellpratzen (56) und Schrauben (38) festgeklemmt werden müssen.

Gemäss einer sowietischen Patentanmeldung SU 1 397 338 A1 wird ein Fahrzeugfenster von der Fahrzeuginnenseite her eingesetzt und mit drehbahren Keilscheiben (9) welche in schlitzförmige Ausnehmungen einer Schlossplatte (10) in einem Sims (6) eingreifen befestigt und gegen eine Dichtung (19) in einer Aussenwand gepresst.

Die Nachteile der vorgenannten Lösungen bestehen darin, dass bei allen Varianten die Befestigungsarbeit bzw. mindestens ein Teil der Befestigungsarbeit von der Fahrzeuginnenseite her verrichtet werden muss. Die Konsequenz daraus ist, dass dabei zusätzlich Verkleidungs und Blendenteile demontiert und montiert werden müssen und dass eben diese Teile keinen spaltfreien, vollflächig homogenen Innenausbau ermöglichen.

Der vorliegenden Erfindung liegt die Aufgabe zugrunde, eine einfache und preiswerte Vorrichtung für den Fenstereinbau zu schaffen, welche die genannten Nachteile nicht aufweist und welche eine rationelle Arbeitsweise ermöglicht.

Diese Aufgabe wird durch die in den Ansprüchen gekennzeichnete Erfindung gelöst.

Die durch die Erfindung erreichten Vorteile sind im wesentlichen darin zu sehen, dass der Ein/Ausbau und die Befestigung sowie das Lösen der Fenster von der Aussenseite des Fahrzeuges erfolgen können und dadurch keine Montage und Demontage der Innenverkleidung nötig ist. Ferner ist, gegeben durch die Art der Befestigung, der zeitliche Aufwand auf wenige Minuten beschränkt.

In den Zeichnungen ist ein Ausführungsbeispiel dargestellt und es zeigen:
- Fig. 1: einen Querschnitt mit arretiertem Fensterrahmen,
- Fig. 2: einen Querschnitt mit zurückgezogenem Keilstück,
- Fig. 3: einen Querschnitt mit festem Keilstück und eingesetztem Deckprofil und
- Fig. 4: eine Aussenansicht einer Fensteröffnung.

Die Figur 1 zeigt eine Fahrzeugwand 1, an welcher innenseitig ein umgekehrt S-förmiges Profil 2 mit Punktschweissung befestigt ist. Auf dem vertikalen Mittelteil des Profiles 2 ist ein Haltewinkel 3 an seinem kurzschenkligen Fuss 3.2 angeschweisst. Am oberen bzw. seitlichen Ende links ist eine Gewindebohrung 3.1 vorhanden. Mit einer Schraube 6 ist am Haltewinkel 3 ein verschiebbares Keilstück 7 angeschraubt, welches rechts einen kurzen vertikalen Schenkel 7.3, ca. in der Mitte einen Schlitz 7.1 und links ein keilförmig verjüngtes Ende 7.2 aufweist. Das keilförmig verjüngte Ende 7.2 sitzt fest in einer Keilnut 4.1 mit einem im Grunde freien Raum 4.4 und nach aussen schrägen Flanken 4.3 innenseitig und 4.2 aussenseitig. Die Keilnut 4.1 befindet sich in einem Fensterrahmenprofil 4, welches eine Fensterscheibe 5 einfasst und rechts oben eine Profilnut 4.5 aufweist.

Die Figur 2 zeigt das Keilstück 7 in zurückgestellter Position. Das linke Ende des Schlitzes 7.1 liegt an der Schraube 6 an.

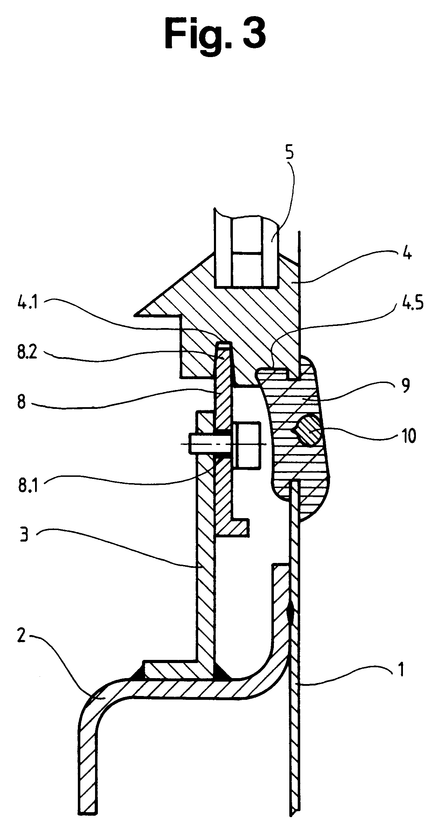

Die Figur 3 zeigt einen Querschnitt durch den unteren horizontalen Rahmenteil eines fertig eingebauten Fensters. Am Haltewinkel 3 ist hier ein festes Keilstück 8 mit einer Bohrung 8.1 in einer eindeutigen Position angeschraubt. Ein nach oben keilförmig verjüngtes Ende 8.2 sitzt fest in der Keilnut 4.1 des Fensterrahmenprofils 4. Die Öffnung zwischen Fensterrahmenprofil 4 und oberer Kante der Fahrzeugwand 1 ist mit einem Deckprofil 9 geschlossen. Das Deckprofil 9 ist beim Fensterrahmenprofil 4 in einer Profilnut 4.5 geführt und überlappt die Aussenseite des Fensterrahmenprofils 4. Ferner umschliesst das Deckprofil 9 das obere Ende der Fahrzeugwand 1 innen- und aussenseitig. Eine Spreizeinlage 10 sorgt für dauernd festen Halt des Deckprofils 9.

Die Figur 4 zeigt die Gesamtansicht einer Fensteröffnung 11 in einer Fahrzeugwand 1. Die Verschiebbarkeit der Keilstücke 7 auf beiden Seiten und oben ist je mit einem Doppelpfeil angegeben. Das feste Keilstück 8 befindet sich am unteren horizontalen Teil der Fensteröffnung 11.

Die vorstehend beschriebene Vorrichtung arbeitet wie folgt: Vor dem Einbau einer Fensterscheibe 5 mit Fensterrahmenprofil 4 in eine Fensteröffnung 11 werden die verschiebbaren Keilstücke 7 in ihre äusserste Position geschoben und dort mit den Schrauben 6 blockiert, so dass eine maximal grosse Einbauöffnung entsteht. Dann wird eine mit dem Fensterrahmenprofil 4 versehene Fensterscheibe 5 auf das feste Keilstück 8 abgestellt und in senkrechte Lage gebracht, so dass das keilförmig verjüngte Ende 8.2 des Keilstückes 8 fest in der Keilnut 4.1 sitzt. Darauf wird das obere horizontale Keilstück 7 gelöst, in die Keilnut 4.1 gedrückt und wieder festgeschraubt. Der gleiche Vorgang erfolgt auf der linken und rechten vertikalen Seite der Fensteröffnung 11. Die Einbauarbeit wird mit dem Einlegen des Deckprofils 9 und dessen Fixierung mit der Spreizeinlage 10 abgeschlossen. Der Ausbau erfolgt in umgekehrter Reihenfolge. Ein so eingebautes Fahrzeugfenster sitzt fest und spielfrei in seiner Halterung und kann im Schadenfalle innert einigen Minuten ausgewechselt werden.

In einer weitergebildeten Form können die Keilstücke 7 eine Federvorspannung aufweisen und beim Einbau nach Lösen einer Arretierung von selbst in die Keilnut 4.1 springen.

Die beschriebene Vorrichtung lässt sich auch für Strassenfahrzeuge verwenden.

## Patentansprüche

1. Vorrichtung für den Ein/Ausbau und die Befestigung von aus Rahmen und Scheiben bestehenden Fenstern mittels mechanischen Befestigungselementen in Fensteröffnungen bei Schienenfahrzeugen, wobei, zwischen einem Fensterrahmen und einer Fahrzeugwand mindestens eine kraft- und formschlüssige Schraubverbindung vorhanden ist,
dadurch gekennzeichnet,
dass der Fensterrahmen (4) stirnseitig eine auf Keilstücke (7, 8) passende Keilnut aufweist und
dass zwischen dem Fensterrahmen (4) und der Fahrzeugwand (1) mindestens eine kraft- und formschlüssige Nut/Keilverbindung vorhanden ist.

2. Vorrichtung nach Anspruch 1,
**dadurch gekennzeichnet,**
dass Nutflanken (4.2; 4.3) der Keilnut (4.1) eine die spielfreie Befestigung ermöglichende Schräge nach aussen und die Keilstücke (7; 8) stirnseitig ein keilförmig verjüngtes in die Keilnut (4.1) passendes Ende (7.2; 8.2) aufweisen.

3. Vorrichtung nach Anspruch 1,
**dadurch gekennzeichnet,**
dass ein den Zwischenraum zwischen Fahrzeugwand (1) und Festerrahmen (4) deckendes vom Fenstergewicht unbelastetes Deckprofil (9) vorhanden ist.

## Claims

1. Device for the installation/removal and the fastening of windows consisting of frames and panes by means of mechanical fastening elements in window openings in rail vehicles, wherein at least one frictionally locking and mechanically positively locking screw connection is present between a window frame and a vehicle wall, characterised thereby that the window frame (4) has at the end face a wedge groove matched to wedge members (7, 8) and that at least one frictionally locking and mechanically positively locking groove/wedge connection is present between the window frame (4) and the vehicle wall (1).

2. Device according to claim 1, characterised thereby that the groove flanks (4.2; 4.3) of the wedge groove (4.1) have an outward inclination enabling the play-free fastening and the wedge members (7; 8) have at the end face an end (7.2; 8.2) narrowing in wedge shape and fitting in the wedge groove (4.1).

3. Device according to claim 1, characterised thereby that a cover profile (9), which covers the intermediate space between the vehicle wall (1) and window frame (4) and which is not loaded by the weight of the window, is present.

## Revendications

1. Dispositif pour le montage/démontage et la fixation de fenêtres composées de châssis et de vitres, à l'aide d'éléments de fixation mécaniques, dans des ouvertures de fenêtres sur des véhicules sur rails, étant précisé qu'il est prévu, entre un châssis de fenêtre et une paroi de véhicule, au moins une liaison par vissage par force et par complémentarité de forme, caractérisé en ce que le châssis de fenêtre (4) comporte, côté frontal, une rainure de clavette adaptée à des éléments formant clavettes (7, 8), et en ce qu'il est prévu, entre le châssis de fenêtre (4) et la paroi de véhicule (1), au moins une liaison rainure/clavette par force et par complémentarité de forme.

2. Dispositif selon la revendication 1, caractérisé en ce que des flancs (4.2 ; 4.3) de la rainure de clavette (4.1) présentent une inclinaison vers l'extérieur permettant la fixation sans jeu, et les éléments formant clavettes (7 ; 8) présentent, côté frontal, une extrémité (7.2 ; 8.2) effilée en forme de clavette adaptée à la rainure de clavette (4.1).

3. Dispositif selon la revendication 1, caractérisé en ce qu'il est prévu un profilé de recouvrement (9) couvrant l'espace intermédiaire entre la paroi de véhicule (1) et le châssis de fenêtre (4) et non sollicité par le poids de la fenêtre.
